# EUROPÄISCHE PATENTANMELDUNG

(11) **EP 1 033 641 A1**
(43) Veröffentlichungstag der Anmeldung: **06.09.2000**
(21) Anmeldenummer: 00200505.6
(22) Anmeldetag: 16.02.2000
(51) Int. Cl.: G05D 23/275, G05D 23/19

(54) **Steuereinrichtung für eine Heizeinrichtung**

(30) Priorität: 02.03.1999 DE 19909102
(71) Anmelder: Danfoss A/S, 6430 Nordborg (DK)
(72) Erfinder: Frederiksen, Bjarne, 8600 Silkeborg (DE); Schubert, Flemming, 7100 Vejle (DK); Nielsen, Niels Steen, 8600 Silkeborg (DK); Rasmussen, Bent, 8600 Silkeborg (DE); Larsen, Arne Börge, 8660 Skanderborg (DK)

(57) **Zusammenfassung**

Es wird eine Steuereinrichtung (1) für eine Heizeinrichtung angegeben mit Bedienungselementen (4-10) und einer Anzeige (3).

Hierbei möchte man den Überblick und die Bedienung vereinfachen können.

Dazu weisen die Bedienungselemente eine Schalterleiste (9) auf, die für jeden Zeitabschnitt einer vorgegebenen Anzahl von Zeitabschnitten einen Umschalter (A-G) aufweist, dessen Schaltzustand von außen erkennbar ist. Die Anzeige (3) weist eine der Schaltzustände (P1, P2) entsprechende Anzahl von Anzeigeleisten (T1, T2) auf, deren Länge einem Zeitabschnitt entspricht und die in Teilabschnitte unterteilt sind, wobei in jedem Teilabschnitt ein eingestellter Betriebszustand erkennbar ist.

## Beschreibung

Die Erfindung betrifft eine Steuereinerichtung für eine Heizeinrichtung mit Bedienungselementen und einer Anzeige.

Eine derartige Steuereinrichtung dient dazu, die Heizeinrichtung nach einen vorgegebenen "Programm" zu betreiben, insbesondere dazu, zu unterschiedlichen Zeiten unterschiedliche Wärmemengen abzugeben. Hierbei wird das Ziel verfolgt, Energie zu sparen, weil eine Wärmeabgabe nicht immer oder nicht immer in vollen Umfang erforderlich ist.

Es sind hierzu eine Reihe von programmierbaren Steuereinrichtungen auf den Markt. Der Benutzer wird hierbei durch ein Menü geführt. Derartige Menüs weisen üblicherweise eine größere Anzahl von Ebenen auf, wobei in jeder Ebene wiederum Einstellungen geändert werden können. Dies macht es schwierig, den Überblick über die gewählten Einstellungen zu behalten oder zu bekommen. Wenn man den Überblick dann gewonnen hat, ist es oft sehr schwierig, die Programmierung zu ändern.

Der Erfindung liegt die Aufgabe zugrunde, den Überblick und die Bedienung zu vereinfachen.

Diese Aufgabe wird bei einer Steuereinrichtung der eingangs genannten Art dadurch gelöst, daß die Bedienungselemente eine Schalterleiste aufweisen, die für jeden Zeitabschnitt einer vorgegebenen Anzahl von Zeitabschnitten einen Umschalter aufweist, dessen Schaltzustand von außen erkennbar ist, daß die Anzeige eine der Anzahl der Schaltzustände entsprechende Anzahl von Anzeigeleisten aufweist, deren Länge einem Zeitabschnitt entspricht und die in Teilabschnitte unterteilt sind, wobei in jedem Teilabschnitt ein eingestellter Betriebszustand erkennbar ist.

Damit läßt sich auf einen Blick erkennen, welcher Betriebszustand in den Teilabschnitten der jeweiligen Zeitabschnitte vorgewählt worden ist. Man identifiziert zunächst anhand der Stellung der Schalter der Schalterleiste, welche Anzeigeleiste für diesen Zeitabschnitt gültig ist. In der entsprechenden Anzeigeleiste kann man dann verfolgen, welche Teilabschnitte mit welchem Betriebszustand belegt worden sind. Durch ein einfaches Ändern der Schalterstellung kann man dann für einen bestimmten Zeitabschnitt, dem der entsprechende Schalter zugeordnet ist, auch das "Programm" ändern. Dieses "Programm" findet sich dann auf der der entsprechenden Schalterstellung zugeordneten Anzeigeleiste wieder. Natürlich zeigt die Steuereinrichtung das entsprechende Programm nicht nur an, sondern steuert die Heizeinrichtung auch entsprechend diesem Programm. Durch die Steuereinrichtung wird man zwar in der Anzahl von Wahlmöglichkeiten begrenzt, weil man auf eine vorbestimmte Anzahl von Programmen festgelegt ist. Es hat sich jedoch in der Praxis herausgestellt, daß auch bei einer beliebig großen Anzahl von Wahlmöglichkeiten immer nur einige wenige Programme gefahren oder ausgewählt werden.

Vorzugsweise weisen die Bedienungselemente mindestens eine Richtungstaste und mindestens eine Änderungstaste auf. Mit der Richtungstaste kann man in der Anzeige von einem "Feld", d.h. einem veränderbaren Teil der Anzeige, zum nächsten wechseln. Mit der Änderungstaste kann man den Feldinhalt verändern. Die Änderung des Feldinhaltes kann dann zwar nur in einer vorgegebenen Reihenfolge erfolgen und auch die Anzahl der Feldinhalte ist begrenzt. Dies reicht aber in der überwiegenden Zahl der Fälle aus. Dafür wird die Einstellung, d.h. die "Programmierung" der Steuereinrichtung sehr viel einfacher. Wie oben bereits erläutert, hat eine Änderung in der Anzeige natürlich auch eine Änderung im Betriebsverhalten des Steuergerätes zur Folge. Das Steuergerät arbeitet dann so, wie es in der Anzeige angezeigt wird.

Vorzugsweise weist die Anzeigeleiste für jeden Betriebszustand eines Teilbereichs ein Anzeigefeld auf, wobei seitlich neben der Anzeigeleiste eine Kennung der Betriebszustände angeordnet ist. Dies vereinfacht nicht nur die Anzeige, es erleichtert auch den Überblick. Die einzelnen Teilbereiche sind spaltenartig nebeneinander angeordnet, wobei die letzte oder die erste Spalte die Kennung der Betriebszustände enthält. Diese kann beispielsweise durch Symbole (Sonne, Mond, etc.) gebildet sein. Innerhalb einer jeden Spalte sind dann eine der Anzahl der möglichen Betriebszustände entsprechende Anzahl von Zeilen vorgesehen. Es kann immer nur eine Zeile pro Spalte markiert sein. Aus der sich dadurch ergebenden Matrix kann man sehr schnell einen Überblick gewinnen.

Vorzugsweise ist die Kennung außerhalb der Anzeige angeordnet. Sie kann beispielsweise außen auf dem Gehäuse der Steuereinrichtung angeordnet sein. Dies erleichtert es, das Steuergerät an verschiedene Sprachgebiete anzupassen. Die eigentliche Anzeige mit den sich ändernden Inhalten kann dann für alle Steuergeräte einheitlich beibehalten werden, während die Zuordnung der Anzeigeninhalte zur Information länderspezifisch erfolgen kann.

Mit Vorteil zeigt die Anzeige die aktuelle Uhrzeit und die Nummer des aktuellen Zeitabschnitts an. Der Benutzer kann sich dann leichter über die aktuelle zeitliche Position innerhalb des "Programms" orientieren.

Vorzugsweise sind sieben Zeitabschnitte vorgesehen und die Schaltleiste weist sieben Schalter auf. Damit kann man sich bei der Programmierung der Steuereinrichtung dem Wochenrhythmus anpassen. Jeder Zeitabschnitt entspricht dann einem Tag.

Auch ist von Vorteil, wenn jeder Schalter nur zwei Schaltzustände aufweist. Damit läßt sich zum Beispiel in jedem Teilabschnitt festlegen, ob die Heizeinrichtung mit Tages- oder Komforttemperatur oder mit Nachtabsenkung arbeiten soll. Diese Wahlmöglichkeit reicht in den meisten Fällen aus.

Mit Vorteil weist das Steuergerät eine Hälfte einer Verbindungseinrichtung auf und ist mit einem Thermostatventilaufsatz lösbar verbindbar. Damit ist es möglich, den jeweiligen Thermostatventilaufsatz lokal und individuell zu steuern. Die Programmierung, d.h. die Änderung der Einstellungen des Steuergerätes, sind dann bequem vorzunehmen, wenn die Steuereinrichtung von dem Thermostatventilaufsatz abgenommen worden ist. Die Thermostatventilaufsätze befinden sich üblicherweise an einem Heizkörper und dementsprechend höchstens in Hüfthöhe. Eine Programmierung dort ist üblicherweise mit einer unbequemen Körperhaltung verbunden. Wenn es hingegen möglich ist, die Steuereinrichtung vom Thermostatventilaufsatz abzunehmen, dann kann man die Programmierung in bequemer Körperhaltung oder sogar abseits von dem Heizkörper sitzend durchführen.

Vorzugsweise sind die Anzeige und die Bedienungselemente über Kopf angeordnet. Der Kopfteil der Steuereinrichtung ist der Stirnseite des Thermostatventilaufsatzes zugeordnet. Der Fußteil befindet sich im montierten Zustand dementsprechend dort, wo der Thermostatventilaufsatz auf das Ventil aufgesetzt ist. Wenn man nun die Anzeige und die Bedienungselemente so anordnet, daß sie dann zu lesen sind, wenn der Kopfteil nach unten weist, dann entspricht dies der Ausrichtung, die die Steuereinrichtung hat, wenn der Benutzer sie vom Thermostatventilaufsatz abnimmt.

Vorzugsweise weist die Steuereinrichtung ein Gehäuse mit einer Öffnung auf, hinter der ein mechanisches Antriebselement angeordnet ist. Wenn also die Steuereinrichtung mit dem Thermostatventilaufsatz verbunden wird, dann kann das mechanische Antriebselement auf ein Übertragungsglied wirken, das durch die Öffnung in das Innere des Gehäuses ragt. Auf diese Weise kann das Steuergerät das eingestellte Programm auf den Thermostatventilaufsatz wirken lassen.

Vorteilhafterweise ist das Antriebselement als Ritzel eines Motors ausgebildet. Dieses Ritzel sitzt auf der Abtriebsachse des Motors und kommt im montierten Zustand mit einem Zahnrad in Eingriff, das im Thermostatventilaufsatz montiert ist und Teil eines Zahnradgetriebes bildet, an dessen Ende eine Verstelleinrichtung angeordnet ist, die mechanisch den Wirkzusammenhang zwischen dem Thermostatelement und einem Bedienelement dieses Thermostatventilaufsatzes verändert. Wenn das Bedienelement auf den Stößel eines Heizkörperventiles drückt und dieses mit zunehmendem Eindrücken stärker drosselt, dann kann die Absenkung der Solltemperatur beispielsweise dadurch vorgenommen werden, daß die Länge eines Verstellelementes zwischen dem Thermostat- e-lement und dem Bedienelement verlängert wird. In diesem Fall wird das Heizkörperventil bei gleicher Umgebungstemperatur früher geschlossen.

Vorzugsweise ist die Öffnung in der gleichen Fläche angeordnet, in der auch die Anzeige und die Bedienungselemente angeordnet sind. Damit sind die Bedienungselemente im montierten Zustand vor einer versehentlichen Bedienung geschützt. Auch die Anzeige ist nicht erkennbar. Damit läßt sich ein gefälliges Äußeres erzielen. Im übrigen kann die Steuereinrichtung ein glattes und geschlossenes Gehäuse aufweisen, was die Reinigung erleichtert.

Vorzugsweise ist ein Ausschalter vorgesehen, der eine Veränderung des Schaltzustandes unterbindet. Dieser Ausschalter kann gegebenenfalls auch außen am Gehäuse vorgesehen sein. Der Benutzer kann beispielsweise dafür sorgen, daß die Nachtabsenkung unterbleibt, wenn der Ausschalter betätigt wird. Ein derartiger Fall tritt beispielsweise dann auf, wenn ein Raum länger genutzt werden soll, als an und für sich programmiert worden ist.

In einer alternativen Ausgestaltung kann die Betätigung des Ausschalters zunächst bewirken, daß die Steuereinrichtung einen vorbestimmten Zustand einnimmt und dann in diesem Zustand verharrt. Mit Hilfe des Ausschalters läßt sich also ein weiterer Betriebszustand programmieren, der dann aber in allen Zeitabschnitten und in allen Teilabschnitten aller Zeitabschnitte gleichermaßen gilt. Ein derartiger Betriebszustand wäre beispielsweise eine Urlaubseinstellung, bei der die Solltemperatur relativ weit abgesenkt wird (z.B. um 10 bis 20°C) und lediglich ein Frostschutz eingestellt ist.

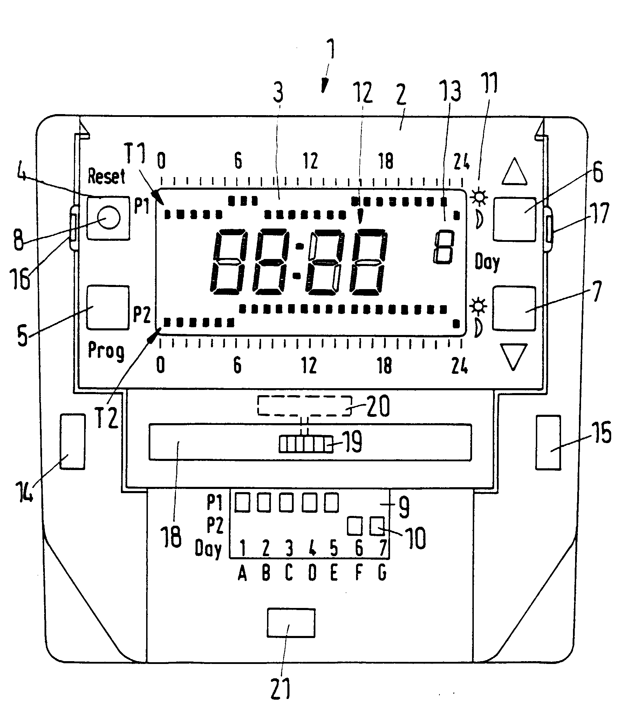

Die Erfindung wird im folgenden anhand eines bevorzugten Ausführungsbeispiels in Verbindung mit der Zeichnung beschrieben. Hierin zeigt die
- einzige Figur:: eine Draufsicht auf eine Seite einer Steuereinrichtung mit Anzeige und Bedienungselementen.

Eine Steuereinrichtung 1 weist ein Gehäuse 2 auf, von dem in der Figur eine Seite sichtbar ist. Das Gehäuse 2 soll mit einem nicht näher dargestellten Thermostatventilaufsatz lösbar verbunden werden können. In diesem Fall liegt die hier sichtbare Seite am Thermostatventilaufsatz an.

Die Steuereinrichtung weist eine Anzeige 3 auf, in der verschiedene Betriebszustände oder vorgewählte Einstellungen angezeigt werden können. Wenn im folgenden von der Änderung der Anzeige die Rede ist, dann bedeutet das, ohne daß dies extra erwähnt werden muß, daß sich das Steuerverhalten der Steuereinrichtung 1 entsprechend ändert.

Die Steuereinrichtung 1 weist ferner einen Rücksetzschalter 4, einen Richtungsschalter 5 und zwei Änderungsschalter 6, 7 auf, die alle als Taster ausgebildet sind. Der Rücksetzschalter 4 kann hierbei noch als Besonderheit aufweisen, daß er eine relativ kleine Tastfläche 8 aufweist, die nur mit einem spitzen Gegenstand betätigt werden kann. Auf diese Weise soll eine versehentliche Betätigung des Rücksetzschalters 4 verhindert werden.

Ferner weist die Steuereinrichtung 1 eine Schalterleiste 9 auf, die sieben Einzelschalter A - G aufweist. Jeder Einzelschalter weist einen kleinen Hebel 10 auf, mit dem der Einzelschalter A - G betätigt werden kann. Die Stellung des Hebels 10 gibt Auskunft über die Schaltstellung. Links neben der Schalterleiste 9 ist eine Markierung P1, P2 angebracht, die jeweils eine der beiden möglichen Schalterstellungen bezeichnet. In der vorliegenden Stellung der Schalterleiste 9 befinden sich also die Einzelschalter A - E in der Stellung P1 und die Einzelschalter F, G in der Schalterstellung P2.

Jeder Einzelschalter A - G entspricht nun einem Wochentag. Diese Tage können in einer Zeile "day" einfach durchnummeriert sein, wie durch die Zahlen "1" bis "7" kenntlich gemacht worden ist.

In der Anzeige 3 finden sich nun zwei Anzeigenleisten T1, T2. Links neben der Anzeige 3 sind in Höhe der entsprechenden Anzeigeleisten T1, T2 entsprechende Markierungen P1, P2 angebracht, über die eine Zuordnung zur Stellung der Einzelschalter A - G der Schalterleiste 9 zu der Anzeige 3 möglich ist.

An dem gegenüberliegenden Ende der Anzeigeleisten T1, T2 sind jeweils Kennungen 11 angeordnet, und zwar für jede Anzeigeleiste T1, T2 eine Anzahl von Kennungen, die vorwählbaren Zuständen der Steuereinrichtung 1 entsprechen. Im vorliegenden Fall ist eine Kennung ein Sonnensymbol. Die Steuereinrichtung 1 steuert den Thermostataufsatz (oder ein anderes Stellglied) in diesem Fall auf Tag- oder Komforttemperatur. Eine zweite Kennung ist ein Mondsymbol. Hier steuert die Steuereinrichtung 1 das entsprechende Stellglied in den Nachtbetrieb, d.h. senkt den Sollwert der Temperatur beispielsweise um einige Grad (1-5°C) ab.

Jede Anzeigeleiste T1, T2 ist in eine Vielzahl von Teilabschnitten unterteilt. Im vorliegenden Fall sind dies 24 Teilabschnitte, die den 24 Stunden eines Tages entsprechen. Oberhalb und Unterhalb der Anzeige 3 befindet sich eine entsprechende Skalierung, die die Identifizierung der einzelnen Teilabschnitte erleichtert.

Jeder Teilabschnitt kann nun in einen der beiden Betriebszustände Sonne oder Mond geschaltet werden und zwar nur in einen dieser beiden Zustände.

Die Programmierung der Steuereinrichtung 1 ist nun folgendermaßen möglich: Wenn der Rücksetzschalter 4 gedrückt wird, dann wird die Steuereinrichtung 1 auf eine vom Hersteller vorgegebene Fabrikeinstellung eingestellt. Diese kann beispielsweise so aussehen, wie sie in der Figur dargestellt ist.

Das Drücken des Richtungsschalters 5 (dies ist natürlich auch dann möglich, wenn der Rücksetzschalter 4 vorher nicht gedrückt worden ist), bewirkt einen Sprung in die Uhrzeitanzeige 12 und erlaubt die Änderung der Uhrzeiteinstellung, die in der Mitte der Anzeige 3 sichtbar ist. Um anzuzeigen, welches Element der Anzeige verstellt werden kann, blinkt dies beispielsweise. Die Uhrzeit kann im vorliegenden Fall durch vier Siebensegmentanzeigen angezeigt werden. Durch Betätigung der Änderungsschalter 6, 7 kann die Uhrzeit verändert werden, und zwar entweder in Richtung auf höhere Werte oder in Richtung auf niedrigere Werte.

Bei einem erneuten Drücken der Richtungstaste 5 wechselt die Anzeige zum Änderungsmodus einer Tagesanzeige 13. Im vorliegenden Ausführungsbeispiel ist der dritte Tag angezeigt. Die Zuordnung eines derartigen Tages zu den einzelnen Wochentagen kann beliebig vorgenommen werden. Allerdings ist die Abfolge der einzelnen Tage 1-7 fest. Im vorliegenden Ausführungsbeispiel entspricht Tag 1 mit Schalter "A" dem Montag und Tag 7 mit Schalter "G" dem Sonntag. Solange die Tagesanzeige 13 blinkt, kann sie mit Hilfe der Änderungsschalter 6, 7 verändert werden.

Durch ein weiteres Drücken des Richtungsschalters 5 gelangt man nun in das erste Feld der Anzeigeleiste T1, die im vorliegenden Ausführungsbeispiel der Stunde zwischen 0 Uhr und 1 Uhr entspricht. Man kann nun ändern, ob in dieser Zeit die Komforttemperatur oder die Nachtabsenkung vorliegen soll. Durch ein weiteres Drücken gelangt man in das nächste Feld, das den Betriebszustand des nächsten Teilabschnitts, also der Zeit zwischen 1 Uhr und 2 Uhr anzeigt. Die Umstellung nimmt man mit Hilfe der Änderungsschalter 6,7 vor. In das jeweils nächste Feld gelangt man durch Drücken des Richtungsschalters 5. Wenn man die erste Anzeigeleiste abgearbeitet hat, gelangt man durch erneutes Drücken des Richtungsschalters 5 in die zweite Anzeigenleiste T2.

Man gibt also mehrere, im vorliegenden Ausführungsbeispiele zwei, Steuerprogramme vor und wählt mit der Schalterleiste 9 aus, welches Steuerprogramm an welchem Tag abgearbeitet werden soll. Durch die Schalterstellung, d.h. die Stellung der Hebel 10, ist auf einen Blick erkennbar, welches Programm für welchen Tag gilt.

Im vorliegenden Ausführungsbeispiel gilt von Montag bis Freitag die Komforttemperatur von 5 Uhr bis 8 Uhr und von 15 Uhr bis 23 Uhr. In den übrigen Zeiten herrscht die Nachtabsenkung. Am Samstag und am Sonntag herrscht von 6 Uhr bis 23 Uhr die Komforttemperatur. In den übrigen Zeiten herrscht die Nachtabsenkung.

Die Steuereinrichtung 1 weist nun Öffnungen 14, 15 auf, mit denen sie auf Haltearme aufgesteckt werden kann, die von einem Thermostatventilaufsatz vorstehen. Wenn diese Haltearme Widerhaken aufweisen, dann kann man die Steuereinrichtung 1 mit dem Thermostatventilaufsatz verrasten. Weitere Öffnungen 16, 17 können vorgesehen sein, um Hilfsbefestigungselemente aufzunehmen.

Hierbei ist zu bemerken, daß der in der Figur oben dargestellte Rand der Steuereinrichtung 1 in dem Zustand, wo die Steuereinrichtung 1 mit dem Thermostatventilaufsatz zusammengebaut ist, in Richtung auf das Ventil weist, während der in der Figur unten dargestellte Rand zur Stirnseite des Thermostatventilaufsatzes, also nach "oben" weist. Die Anzeige 3 und die Bedienungselemente 4, 10 sind also "über Kopf" angeordnet. Wenn der Benutzer die Steuereinrichtung vom Thermosatventilaufsatz abnimmt, dann hat er sie gleich "richtig" in der Hand, d.h. er kann die entsprechenden Angaben unmittelbar ablesen, ohne die Steuereinrichtung 1 drehen zu müssen.

Ferner weist die Seite, wo die Anzeige 3 und die Bedienungselemente 4-10 angeordnet sind, eine weitere Öffnung 18 auf, hinter der ein Ritzel 19 angeordnet ist, das auf der Abtriebswelle eines Motors 20 angeordnet ist. Der Motor 20 ist ein batteriebetriebener Elektromotor, der das Ritzel 19 so ansteuert, wie es in der Anzeige 3 ersichtlich ist. Das Ritzel 19 wirkt, wenn die Steuereinrichtung 1 mit dem Thermostatventilaufsatz verbunden wird, mit einem Zahnrad zusammen, das durch die Öffnung 18 in das Innere der Steuereinrichtung 1 hineinragt. Das Zahnrad ist dann der erste Teil eines Zahnradgetriebes, das eine Verstellung im Inneren des Thermostatventilaufsatzes bewirken kann.

Schließlich kann die Steuereinrichtung 1 auch noch einen Ausschalter 21 aufweisen. Der Ausschalter 21 kann auch an anderer Stelle positioniert sein. Für den Betrieb des Ausschalters gibt es mehrere Möglichkeiten. Eine Möglichkeit besteht darin, daß nach Betätigung des Ausschalters 21 eine Veränderung des aktuell eingenommenen Zustandes nicht mehr erfolgt, beispielsweise erfolgt keine Umschaltung von Tagtemperatur auf Nachtabsenkung oder umgekehrt. Dies ist beispielsweise dann sinnvoll, wenn der Benutzer vorübergehend verhindern will, daß die Temperatur durch die Nachtabsenkung abgesenkt wird.

Eine andere Möglichkeit ist die, daß nach Betätigung des Ausschalters 21 zunächst einmal ein Betriebszustand, beispielsweise eine Urlaubseinstellung mit einer wesentlich stärkeren Temperaturabsenkung und Frostschutz eingestellt wird und danach jede Veränderung unterbleibt. Bei einer derartigen Urlaubseinstellung läuft lediglich die Uhr und die Tagesanzeige weiter. Wenn der Benutzer nach Einstellung der Urlaubseinstellung den Raum auf Dauer verläßt, ist es unerheblich, daß an unterschiedlichen Tagen unterschiedliche Programme gefahren werden können.

Man kann die Steuereinrichtung 1 auch ganz vom Thermostatventilaufsatz entfernen. In diesem Fall arbeitet der Thermostatventilaufsatz (oder ein anderes Stellglied) "normal" weiter, d.h. wie ein herkömmlicher Thermostatventilaufsatz auch.

## Patentansprüche

1. Steuereinrichtung für eine Heizeinrichtung mit Bedienungselementen und einer Anzeige, dadurch gekennzeichnet, daß die Bedienungselemente eine Schalterleiste (9) aufweisen, die für jeden Zeitabschnitt einer vorgegebenen Anzahl von Zeitabschnitten einen Umschalter (A-G) aufweist, dessen Schaltzustand von außen erkennbar ist, daß die Anzeige (3) eine der Anzahl der Schaltzustände (P1, P2) entsprechende Anzahl von Anzeigeleisten (T1, T2) aufweist, deren Länge einem Zeitabschnitt entspricht und die in Teilabschnitte unterteilt sind, wobei in jedem Teilabschnitt ein eingestellter Betriebezustand erkennbar ist.

2. Einrichtung nach Anspruch 1, dadurch gekennzeichnet, daß die Bedienungselemente mindestens eine Richtungstaste (5) und mindestens eine Änderungstaste (6, 7) aufweisen.

3. Einrichtung nach Anspruch 1 oder 2, dadurch gekennzeichnet, daß die Anzeigeleiste (T1, T2) für jeden Betriebszustand eines Teilbereiche ein Anzeigefeld aufweist, wobei seitlich neben der Anzeigeleiste (T1, T2) eine Kennung (11) der Betriebszustände angeordnet ist.

4. Einrichtung nach Anspruch 3, dadurch gekennzeichnet, daß die Kennung (11) außerhalb der Anzeige (3) angeordnet ist.

5. Einrichtung nach einem der Ansprüche 1 bis 4, dadurch gekennzeichnet, daß die Anzeige (3) die aktuelle Uhrzeit (12) und die Nummer (13) des aktuellen Zeitabschnitts anzeigt.

6. Einrichtung nach einem der Ansprüche 1 bis 5, dadurch gekennzeichnet, daß sieben Zeitabschnitte vorgesehen sind und die Schaltleiste (9) sieben Schalter (A-G).

7. Einrichtung nach einem der Ansprüche 1 bis 6, dadurch gekennzeichnet, daß jeder Schalter (A-G) nur zwei Schaltzustände (P1, P2) aufweist.

8. Einrichtung nach einem der Ansprüche 1 bis 7, dadurch gekennzeichnet, daß sie eine Hälfte einer Verbindungseinrichtung (14, 17) aufweist und mit einem Thermostatventilaufsatz lösbar verbindbar ist.

9. Einrichtung nach Anspruch 8, dadurch gekennzeichnet, daß die Anzeige 3 und die Bedienungselemente (4-10) über Kopf angeordnet sind.

10. Einrichtung nach Anspruch 8 oder 9, dadurch gekennzeichnet, daß sie ein Gehäuse 2 mit einer Öffnung (18) aufweist, hinter der ein mechanisches Antriebselement (19) angeordnet ist.

11. Einrichtung nach Anspruch 10, dadurch gekennzeichnet, daß das Antriebselement (19) als Ritzel eines Motors (20) ausgebildet ist.

12. Einrichtung nach Anspruch 10 oder 11, dadurch gekennzeichnet, daß die Öffnung (18) in der gleichen Fläche angeordnet ist, in der auch die Anzeige (3) und die Bedienungselemente (4-10) angeordnet sind.

13. Einrichtung nach einem der Ansprüche 1 bis 12, dadurch gekennzeichnet, daß ein Ausschalter (21) vorgesehen ist, der eine Veränderung des Schaltzustandes unterbindet.

14. Einrichtung nach Anspruch 13, dadurch gekennzeichnet, daß eine Betätigung des Ausschalters (21) zunächst bewirkt, daß sie einen vorbestimmten Zustand einnimmt und dann in diesem Zustand verharrt.
